# EUROPEAN PATENT APPLICATION

(11) **EP 4 485 103 A1**
(43) Date of publication of application: **01.01.2025**
(21) Application number: 24184244.2
(22) Date of filing: 25.06.2024
(51) Int. Cl.: G05B 19/19, G05B 19/416, G05B 19/404, B25J 9/16

(54) **STANDSTILL CONTROL WITH MANIPULATED VARIABLE FEEDFORWARD**

(30) Priority: 28.06.2023 AT 505112023
(71) Applicant: B&R Industrial Automation GmbH, 5142 Eggelsberg (AT)
(72) Inventor: Forthuber, Friedrich, 5144 Handenberg (AT); Herbst, Michael, 5164 Seeham (AT); Weissbacher, Joachim, 5101 Bergheim (AT)
(74) Representative: Patentanwälte Pinter & Weiss OG

(57) **Abstract**

In order to specify a method for the standstill control of a drive body (J_{A}) on which a friction force (Fᵣ) acts, by means of which a controlled reduction in undesirably stored potential energy is possible, an activation manipulated variable (uₐₖₜ) is specified which changes a setting manipulated variable (us) which does not overcome the friction force (Fᵣ) to a relaxation manipulated variable (uₑₙₜ), and the relaxation manipulated variable (uₑₙₜ) is converted by an actuator (A) into a relaxation drive force (Fₑₙₜ) acting on the drive body (J_{A}), wherein the activation manipulated variable (uₐₖₜ) is specified in such a way that the relaxation drive force (Fₑₙₜ) overcomes the friction force (Fᵣ), acting on the drive body (J_{A}), at least temporarily during the standstill control.

## Description

The present invention relates to a method for standstill control of a drive body on which a friction force acts, wherein a setting manipulated variable is determined and converted by means of an actuator into a drive force acting on the drive body in order to bring the drive body to a standstill and/or to keep it at a standstill. Furthermore, the present invention relates to a drive system comprising a drive body, a control unit, and an actuator.

An important and frequent task of modern drive technology is the control of speeds and positions. The terms "speed" and "position" may refer here to linear speeds, angular speeds, rotational speeds, path speeds, and positions corresponding to these speeds. In the following, the examples mentioned are referred to using the generic terms "speed" and "position", wherein speeds and positions are understood as speeds and positions of (mechanical) bodies, which in turn can be components of mechanical single- or multi-body systems. In the context of this patent application, a single- or multi-body system is understood to mean a mechanical system of at least one individual mechanical body, wherein several individual mechanical bodies can be mechanically coupled to one another (e.g., by joints or force elements such as springs or dampers) and are under the influence of forces (e.g., forces generated by actuators or servo motors or electric motors). A multi-body system extended by an actuator to generate the above-mentioned forces is called a drive system. Examples of drive systems with speeds and/or positions to be controlled include internal combustion engines whose crankshaft speeds are to be controlled, electrical machines whose rotor speeds or rotor positions are to be controlled, or, generally, machine-driven drive trains with multiple masses/inertias whose angular speeds are to be controlled.

The task of "speed and/or position control of a drive system" is associated with different requirements depending on the application. Examples include the reduction of transient response times, the reduction in the control energy used, the suppression of vibrations and/or oscillations, and the increase of control dynamics and precision. In combination with the ever-present requirement of "small size" and "low costs," the aforementioned requirements continually give rise to new research questions in drive technology, which is also reflected in the known prior art.

EP 3 958 446 A1 teaches a linear motor system with a guide track, a plurality of electromagnets distributed along the guide track, and at least one transport unit which is guided by the guide track and can be moved along it, and is vibrated to improve position control.

DE 10 2019 133 025 A1 discloses a method for position control for an electromechanically assisted steering system, in which controller parameters are adapted based on a frequency response identified during operation.

EP 0473914 A2 further shows a system for controlling the position of an actuator in a motor vehicle, wherein a target to be controlled is influenced by a reference governor, which in turn depends on an estimated value of a position to be controlled, in order to improve the dynamics of the system under different operating conditions.

One circumstance that is, however, only inadequately addressed in the cited prior art is the unintentional storage of potential energy. Specifically, potential energy can be stored in a wide variety of drive systems during positioning processes. This can be due to various reasons, but in practice is usually caused by friction effects (e.g., bearing friction, friction effects between coupled loads). Potential energy stored in a drive system can manifest itself in different ways, but in particular through tensions that remain when the system is at a standstill, e.g., in a remaining tension of a mechanical spring or a mechanical shaft of a multi-body system driven in the drive system, or also in a remaining tilting of a body in an uncontrollable degree of freedom, e.g., in a linear drive system, in a tilting of a transport unit in a spatial direction that differs from a direction of movement along which the transport unit can be moved in a controlled manner, e.g., a tilting about an axis of rotation that cannot be controlled by the control unit for controlling a movement of a transport unit.

An important example of a class of drive systems in which unwanted storage of potential energy often occurs is a drive system with a drive body and at least one coupling body mechanically coupled to the drive body, usually via a mechanical shaft, on which coupling body static friction acts. In such a drive system, a position controller is often used to determine a manipulated variable for adjusting or setting a position of the drive body to a target position, and the manipulated variable is converted by an actuator into a drive force acting on the drive body. In practice, in such a two-body system, the scenario can arise that the coupling body ends its movement at the end of a positioning process, and comes to a standstill before the drive body has reached the target position specified for it and is therefore still moving. An important reason for this are decreasing drive forces required by the position controller and acting on the drive body towards the end of positioning processes. Decreasing drive forces result in likewise decreasing coupling forces transmitted through the mechanical coupling and acting on the coupling body. If the coupling forces acting on the coupling body are lower than the friction forces acting on the coupling body, the friction forces hold back the coupling body, so that the coupling body is braked and ultimately stopped. If the coupling body is subsequently already fixed while the drive body is still moving, in particular to reach the target position intended for it, this can lead to a distortion of the mechanical coupling between the drive body and the coupling body, for obvious reasons. According to Hooke's law, potential energy is stored in the mechanical coupling.

Storage of potential energy can also occur in a single friction body, e.g., when a position of an upper surface of the friction body is positioned, a lower surface opposite the upper surface is restrained by friction, such as by static friction or sliding friction or rolling friction or rolling friction, the upper surface and the lower surface move relative to each other during positioning, and the single body twists in on itself.

If a new movement is started from a standstill with stored potential energy, it usually happens that the stored potential energy is dissipated after the movement of the given bodies begins again. In the described example of a two-body system, an existing distortion of the mechanical coupling is usually suddenly released when the movement starts again, as soon as the coupling body leaves the friction band defined by the acting friction forces, which can result in undesirable oscillations and vibrations of the drive body and/or coupling body. For various reasons, it is therefore important to avoid unnecessary and uncontrollable storage of potential energy in a drive system, be it due to increased component load, reduced control accuracy, or increased consumption of actuating energy.

The known prior art does not take into account potential energy stored in drive systems and therefore does not offer any approaches to counteract vibrations resulting in particular from the dissipation of potential energy. It is therefore an object of the present invention to provide a method for operating a drive system which enables a controlled reduction in potential energy undesirably stored when a single-body or multi-body system is brought to a standstill.

This object is achieved by the features of the independent claims. Specifically, the independent claims for the method mentioned at the outset provide for determining a setting manipulated variable for the drive body to be brought to a standstill or for the drive body brought to a standstill or for the drive body held at a standstill, which setting manipulated variable alone results in a drive force that does not overcome the friction force, as well as specifying an activation manipulated variable and changing the determined setting manipulated variable to a relaxation manipulated variable by means of the activation manipulated variable, so that the relaxation manipulated variable is converted by the actuator into a relaxation drive force, acting on the drive body to move the drive body, wherein the activation manipulated variable is specified such that the relaxation drive force overcomes the friction force acting on the drive body at least temporarily during the standstill control.

By including an activation manipulated variable, which, in conjunction with the setting manipulated variable, results in a relaxation drive force being created, which in turn overcomes the acting friction forces, it is ensured that there is at least a brief repeated or additional movement of the drive body after the drive body has already come to a standstill or shortly before the drive body comes to a standstill. In this way, unwanted stored potential energy can be reduced, in particular by releasing tensions in the drive body, and the disadvantages mentioned above associated with unwanted stored potential energy can be avoided, such as unwanted vibrations when the drive body starts moving again. Overcoming means, as is known, that a magnitude, such as in particular an absolute magnitude or another norm, of the relaxation drive force overcomes a corresponding magnitude of the friction force, acting on the drive body, during the standstill control, at least temporarily.

Advantageously, the setting manipulated variable is determined by means of a controller from a deviation between at least one movement variable of the drive body and a standstill set point specified for the at least one movement variable, so that the at least one movement variable of the drive body is set to the specified standstill set point. According to this advantageous embodiment, a closed control loop is used to adjust the at least one movement variable. In this procedure, different methods known from control engineering for controlling/adjusting at least one movement variable can be used in an advantageous manner.

It should be noted that the use of closed control loops is in no way mandatory for the implementation of the present invention. In specific terms, feedback of a measured movement variable can also be dispensed with, and thus no closed control loop ("feed-back control," "closed-loop control") can be used, but, rather, a feed-forward control system well known from control engineering ("feed-forward control," "open-loop control"). Depending on the application, e.g., if no suitable measurement data of the movement variables to be adjusted are available, the use of a control system can be advantageous and in particular preferable to feedback-based controls.

Further advantageous embodiments of the invention provide for the activation manipulated variable to be determined and used to change the setting manipulated variable only when the drive body has been held at a standstill for a specified minimum standstill period, and/or for the activation manipulated variable to be determined in the form of a periodic signal with a specified activation amplitude and/or a specified activation frequency, wherein the activation manipulated variable preferably has a time average value that corresponds to the value zero, and/or for the activation manipulated variable to be used to change the setting manipulated variable only for a specified activation period. The invention can be precisely tailored to a given application by suitable variation/adaptation of these parameters and is therefore particularly flexible in use compared to concepts from the prior art. Limiting the activation manipulated variable to an activation time period allows, in particular, that the activation manipulated variable not be switched on for an unnecessarily long time, but only for as long as is necessary to reduce potential energy. In this way, no unnecessary actuating energy is added, and, above all, no energy is unnecessarily wasted.

Likewise, in the context of the invention, a position of the drive body can be determined as a movement variable of the drive body, and a target position for the determined position can be specified as a standstill set point, or, of course, a speed of the drive body can also be determined as a movement variable of the drive body, and a vanishing target speed for the determined speed can be specified as a standstill set point.

In the case of using a position of the drive body as a movement variable of the drive body and specifying a target position for the determined position as a standstill set point, a further advantageous embodiment of the invention can provide for the activation manipulated variable to be determined and used to change the setting manipulated variable only if a magnitude of a position deviation between the position of the drive body and the specified target position when the drive body is at a standstill is above a specified deviation threshold value, wherein the sign of the activation manipulated variable can be selected as a sign opposite to the sign of the position deviation or as a sign corresponding to the sign of the position deviation. Depending on the specific application, in addition to the aforementioned reduction in potential energy, this can often also lead to a reduction in control errors that still exist at standstill, which can also allow an increase in setting or adjustment accuracy.

In further embodiments of the invention, it often proves advantageous to determine a position and a speed of the drive body in a first coordinate direction as movement variables, wherein the drive force generated by the actuator acts on the drive body along this first coordinate direction, and to determine a second position of the drive body in a second coordinate direction different from the first coordinate direction and a second speed of the drive body along the second coordinate direction as further movement variables, and to determine the activation manipulated variable in this scenario only then and use it to change the setting manipulated variable if a magnitude of a second position deviation between the determined second position and a second target position specified for the second position is above a specified second position threshold value. As will be explained in detail below, this can be used to reduce tilting of drive bodies in particular, which occurs in spatial directions that are different from the spatial direction along which the set movement variable occurs, and which can also result in a storage of potential energy.

In the case of drive systems that often appear in practice, which on the one hand have a drive body, but on the other also comprise a number n of further mechanical bodies that are mechanically coupled to the drive body and on which friction and thus also a friction force caused by the respective friction acts, a resonant multi-body system with at least n resonance frequencies is formed in the drive system. Here, in a further, particularly advantageous manner, it can be provided that the activation manipulated variable in the form of a periodic signal with a specified activation amplitude and/or a specified activation frequency is specified, wherein the activation frequency is selected to be greater than the largest of the n resonance frequencies of the resonant multi-body system, or is selected to be greater than or equal to the smallest of the n resonance frequencies of the resonant multi-body system, or equal to one of the n resonance frequencies of the resonant multi-body system, wherein it may additionally be provided that a magnitude of a drive force resulting from a conversion of the relaxation manipulated variable by the actuator overcomes, at least temporarily, a sum of the friction force acting on the drive body and the friction forces acting on the number n of further bodies, which result from the respective acting frictions. These options are also a result of the flexibility offered. In certain cases, it may be advisable to avoid excitation at a resonance point in order to avoid damage to the drive system. In other cases, excitation at a resonance point offers the possibility of generating a large effect with only small excitation amplitudes and thus achieving the stated goals, i.e., a reduction in potential energy or a reduction in mechanical tension, as quickly as possible.

Furthermore, the aforementioned object is achieved by a drive system mentioned at the outset, the control unit of which is designed to determine a setting manipulated variable for the drive body to be brought to a standstill or for the drive body that is brought to a standstill or for the drive body that is held at a standstill, which setting manipulated variable alone results in a drive force that does not overcome the friction force, as well as to specify an activation manipulated variable and to change the determined setting manipulated variable to a relaxation manipulated variable by means of the activation manipulated variable, and the actuator of which is further designed to convert the relaxation manipulated variable into a relaxation drive force, acting on the drive body, to move the stationary drive body, wherein the activation manipulated variable is specified in such a way that the relaxation drive force at least temporarily overcomes the friction force, acting on the drive body, during the standstill control.

The present invention is described in greater detail below with reference to Figures 1 to 7, which show schematic and non-limiting advantageous embodiments of the invention by way of example. In the figures:
Fig. 1 shows a control loop for a multi-body system according to the prior art,
Fig. 2 shows a friction model known from the prior art,
Fig. 3 shows a two-body system which is degenerated to form a locked single-body system,
Fig. 4 shows a control circuit with manipulated variable feedforward according to the invention,
Fig. 5a, 5b, 5c show possible time courses of the activation manipulated variable according to the invention,
Fig. 6 shows a portion of a long stator linear motor,
Fig. 7 shows an application of the invention for solving a tilting of a shuttle of a linear motor.

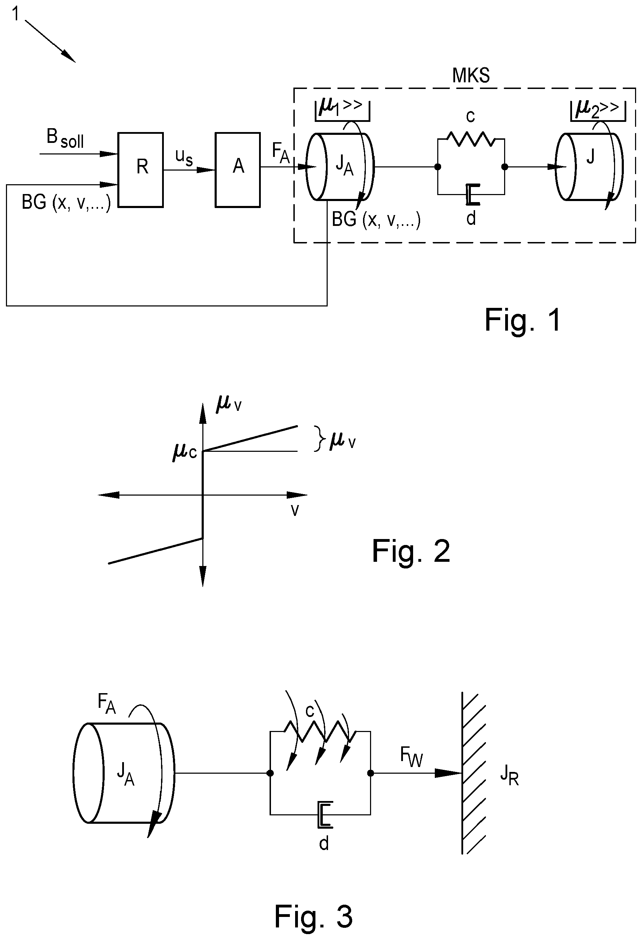

Fig. 1 shows a control loop 1 for controlling a movement variable BG of a multi-body system MKS according to the prior art. In the case shown, the multi-body system MKS to be controlled is a two-body system with two bodies J_{A}, J_{K}, a drive body J_{A}, and a coupling body J_{K} mechanically coupled to the drive body J_{A}. It should already be noted at this juncture that a multi-body system MKS, which is controlled by means of a control loop 1 as shown in Fig. 1, can also have more than two bodies J_{A}, J_{K}, and can be given, for example, as a three-, four-, or five-body system, but also only one body - specifically, only one drive body J_{A}. The problem of unintentionally stored potential energy solved by the present invention can occur in all of these cases.

It should also be noted that the closed control loop 1 shown in Fig. 1 is to be regarded as purely exemplary and in particular serves to provide a clear and comprehensible representation of the invention. The standstill control presented below could also be implemented without closed feedback. The term "standstill control" therefore includes, in the context of this application, both a regulation system in the classical sense with feedback and a control without feedback. For the implementation of the invention explained below, there are no restrictions arising from the use of a control system or from the use of a classic regulation system.

A multi-body system MKS as shown in Fig. 1 can be a rotary or a translatory multi-body system MKS, i.e., a multi-body system MKS, whose bodies J_{A}, J_{R} perform translational movements, rotational movements, or superimpositions of translational and rotational movements. It is also possible that one body of the multi-body system MKS moves rotationally and another body moves translationally. In the following discussion, we will therefore use the generic terms "body," "speed," "force," "wave force," etc. With regard to rotary multi-body systems (MKS), this should also include the analogous terms "inertia," "rotational speed" or "angular speed," "torque," "shaft torque," etc. Concrete examples of multi-body systems (MKS) include drive axes of machine tools, drive trains, test benches with a loading machine and a test object connected to the loading machine via a mechanical shaft (e.g., an internal combustion engine to be tested), printing rollers, or other multi-body systems (MKS).

In the case shown in Fig. 1, the mechanical coupling of the drive body Ja, and the coupling body J_{K} is achieved via a spring element c and a damper element d (corresponding to the usual designation of stiffness with "c" or damping with "d"). The spring element c and the damper element d thereby form an elastic, mechanical shaft. In a known manner, relative movements between the drive body Ja, and the coupling body J_{K} result in shaft forces Fw transmitted via the spring element c and the damper element d, i.e., shaft forces Fw transmitted via the mechanical shaft formed by the spring element c and the damper element d, which influence the movements of the bodies J_{A}, J_{K} in a known manner.

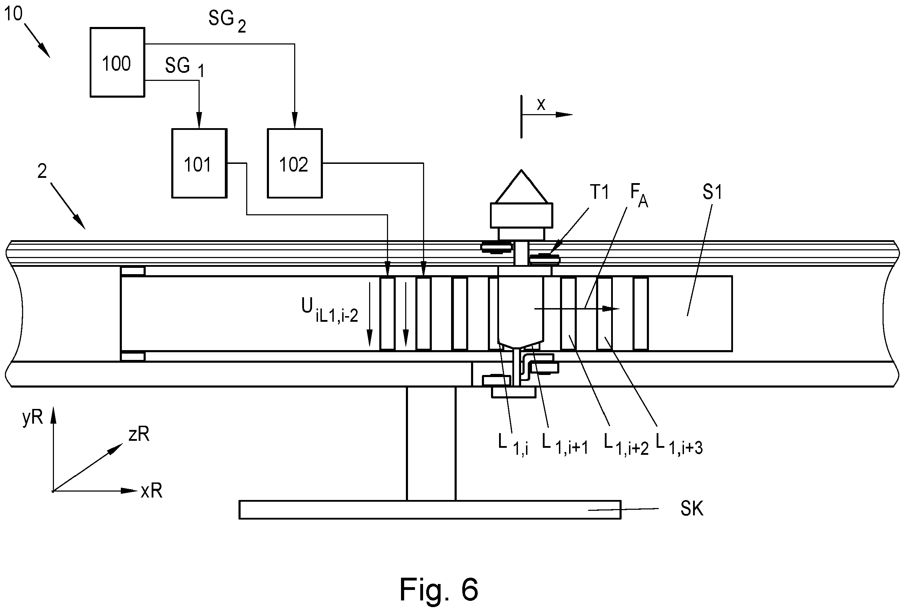

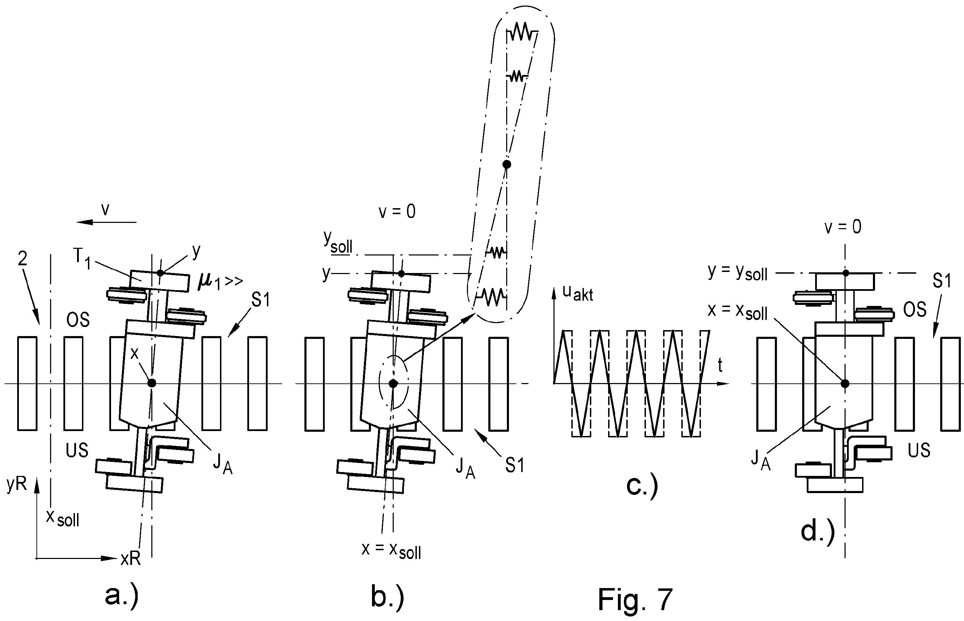

For the following explanations, it is assumed that a non-negligible friction µ₁, µ₂ acts on both the drive body Ja, and the coupling body J_{K}, which in a known manner cause non-negligible friction forces Fᵣ₁, Fᵣ₂ (possible and sufficiently known friction mechanisms are discussed below with reference to Fig. 2). However, this restriction does not represent a necessary requirement in the context of this invention, since in particular drive systems with only one drive body Ja, alone can be suitable applications for the invention (see in this regard Fig. 6 and Fig. 7), where no second coupling body J_{K} exists, or the coupling body J_{K} could be completely or almost friction-free. However, the relationships relevant to the invention are particularly clear and easy to see on the basis of the friction dual-mass oscillator under consideration.

Friction can occur for different reasons, so that the frictions µ₁, µ₂ considered here can be static friction or sliding friction or rolling friction or a combination of these frictions. For a variety of reasons, the friction µ₂ acting on the coupling body J_{K} can be much stronger than the friction µ₁ acting on the drive body J_{A}. To illustrate the frictions mentioned, a friction model known from the prior art is shown in Fig. 2, in which Coulomb friction µ_{C} and viscous (speed-dependent) friction µᵥ act in combination. The frictions µ₁ and µ₂ shown in Fig. 1 can therefore correspond to a Coulomb friction µ_{C}, a viscous (speed-dependent) friction µᵥ, or a combination of these frictions.

The frictions µ₁ and µ₂ cause friction forces Fᵣ₁, Fᵣ₂ acting on the bodies in a known manner, e.g., in the case of speed-proportional friction, according to a product of friction and speed (µ·v), in the case of Coulomb friction µ_{C}, according to a product of friction and the sign of the speed (µ·sign(v)), in the case of static friction, according to a friction force compensating for a drive force, etc. These relationships are well known to a specialist in the field of drive technology (cf., e.g., The Mechatronics Handbook, R.H. Bishop, CRC Press, 2002), so details will not be discussed here.

With regard to the drive body Ja, and the coupling body J_{K} mechanically coupled to it, it is assumed in the present connection that only the drive body Ja, is subjected to a drive force F_{A} which can be specified by a controller R. This is also in no way mandatory in the context of this invention, so that a force specified by a controller R could also act on the coupling body J_{K} However, the restriction of drive forces F_{A} acting only on the drive body Ja, facilitates the explanation of the inventive principle in question, since, with a drive force F_{A} acting only on the drive body J_{A}, the movement of the coupling body J_{K} is influenced only by the shaft force Fw transmitted via the mechanical shaft and by the friction µ₂ acting on the coupling body J_{K}.

In the block diagram shown in Fig. 1, in particular a position x of the drive body Ja, can be determined as a movement variable BG, or a speed v of the drive body J_{A}, or an acceleration a or a force, etc. Various possibilities for determining positions and/or speeds and/or accelerations and/or forces are known in the prior art, which are sufficiently known to a person skilled in the field of drive technology, e.g., the use of sensors, such as rotary encoders or translatory encoders. In the course of the following explanations, it is assumed, without loss of generality, that a position x of the drive body Ja, is determined and controlled as a movement variable BG.

Specifically, in the context of this invention, a position x can be measured directly as a movement variable BG, e.g., by a position sensor, which immediately generates a position measurement signal and consequently no longer requires any further processing of a signal generated by a sensor to determine a speed measurement signal. However, a position x can also be determined from another measurement signal, e.g., by integrating a speed signal, or it can be calculated from other signals using the observer technique well known from control engineering, e.g., from measured electrical currents or voltages or from magnetic fluxes, etc. For the present invention, it is irrelevant how a processed movement variable BG of a drive body Ja, is specifically determined.

The position x determined as movement variable BG is fed to the controller R in the case shown in Fig. 1. The controller R uses the movement variable BG and a standstill set point Bₛₒₗₗ specified as the target position xₛₒₗₗ, to determine an adjustment manipulated variable us for adjusting the position x to the target position xₛₒₗₗ. A deviation e between the target position xₛₒₗₗ and position x is usually determined within the controller R, and the setting manipulated variable us is determined from the determined deviation e, the control error e, using a predefined control law. Such a control law can involve a variety of approaches known from control engineering, such as approaches from the areas of sliding mode control, backstepping control, model predictive control, or flatness-based control. In practice, cascaded control loops are often used in this connection, in which a higher-level position controller specifies a target speed vₛₒₗₗ, for a lower-level speed controller Rᵥ as a manipulated variable, which the lower-level speed controller Rᵥ subsequently regulates by means of a comparison with a speed v of the drive body J_{A}. In such a case, two or more movement variables BG can be used in the control.

As is known, in a control loop 1 as shown in Fig. 1, the setting manipulated variable us determined by the controller R does not act directly on the multi-body system MKS, specifically on the drive body Ja, and ultimately on the movement variable BG to be controlled, but the setting manipulated variable us (information signal) is still converted by an actuator A into a corresponding power variable F_{A}, i.e., into a real (drive) force, a real torque, a real current, such as a drive current i_{A} to generate a drive force, etc.

For practical implementation, a controller, such as a controller R in particular, for controlling a movement variable can be realized on suitable microprocessor-based hardware, which preferably forms a control unit, such as, for example, on a microcontroller, or in an integrated circuit (ASIC, FPGA). The prior art also offers a variety of options for an actuator A for converting a setting manipulated variable us (information signal) into a drive force F_{A} (power signal), such as servo motors or electric motors in general (asynchronous motor, synchronous motor, stepper motor), linear motors, hydraulic actuators, etc. As is usual with multi-body systems MKS driven by servo motors, a body of the multi-body system MKS can be a component of the servo motor - for example, its rotor. The aforementioned microprocessor-based hardware for implementing controllers, etc., can also be part of the servo motor and be wired to the aforementioned sensors, encoders, or rotary encoders. These relationships are well known to the person skilled in the art of control and/or drive technology, which is why these specifications are not discussed in more detail at this point.

In order to explain the problems solved by the present invention in more detail, Fig. 3 first shows a topological change of the multi-body system MKS shown in Fig. 1, which occurs in the context of the exemplary position control considered in the present case, especially at low speeds of the bodies J_{A}, J_{K}. Low to zero speeds can occur during operation of a multi-body system MKS for a variety of reasons, e.g., due to a corresponding specification by an operator or due to a specified target profile (target speed = 0) or towards the end of a positioning process in which a position x of the drive body Ja, is already close to a target position xₛₒₗₗ, specified for the position x, and the target position xₛₒₗₗ, is slowly approached with the aim of coming to a stop in the target position xₛₒₗₗ. Small deviations between position x and a target position xₛₒₗₗ, especially in combination with speeds that are also low in terms of magnitude, typically lead to small setting manipulated variables Fₛ required by the controller R, which results in low drive forces F_{A}, which in turn results in low shaft forces Fw transmitted via the shaft.

If the coupling body J_{K} of the multi-body system MKS is subjected to a friction µ₂ that cannot be overcome by the wave force Fw, the coupling body J_{K} is braked, despite a drive force F_{A} that is other than zero and despite a wave force Fw that is other than zero, comes to a standstill, and possibly also remains at a standstill. From the perspective of the controller R, which specifies a drive force F_{A} and only perceives a coupling body J_{K} that follows this drive force F_{A} less and less, the coupling body J_{K} behaves like a body with very high or infinitely high inertia or with very high or infinitely high mass. In this case, the multi-body system MKS can be represented in a first approximation as a constrained single-body system, as shown in Fig. 3.

If the coupling body J_{K} is subsequently already fixed, while the drive body J_{A} is still moving, e.g., because it has not yet reached the target position xₛₒₗₗ, intended for it, the mechanical shaft connection between the drive body Ja, and the coupling body J_{K} twists. According to Hooke's law, the potential energy Eₚₒₜ=c·(x-x_{R})²/2 is stored in the mechanical coupling, or the potential energy Eₚₒₜ=c·(xₛₒₗₗ-x_{R})²/2, when the position x has finally reached the specified target position xₛₒₗₗ. In addition to the stored potential energy Eₚₒₜ, a shaft connection tensioned in this way also involves a shaft restoring force Fw = -c·(xₛₒₗₗ-x_{R}) which must be compensated for when the system is at a standstill, since the drive body Ja, to be positioned would otherwise move away from the target position xₛₒₗₗ. Corresponding compensation setting manipulated variables, which lead to compensation forces Fs= c·(xₛₒₗₗ₋x_{R}) for compensation of a remaining restoring force, are contrary to the intention of energy-efficient systems.

The value of a permanent setting manipulated variable Fs= c·(xₛₒₗₗ-x_{R}) can depend on stationary and dynamic factors, as well as on previous system states, and is therefore usually difficult to model or estimate. In practice, precise modeling often presents the problem that such models are mathematically complex and time-consuming, and therefore real-time use is often not possible. In addition to the problem of oscillations and vibrations described at the beginning, which can result from the dissipation of potential energy Eₚₒₜ as just described, the restoring forces mentioned are another reason to avoid unnecessarily stored potential energy, which is stored during the shutdown, i.e., the standstill control, of a drive body J_{A}.

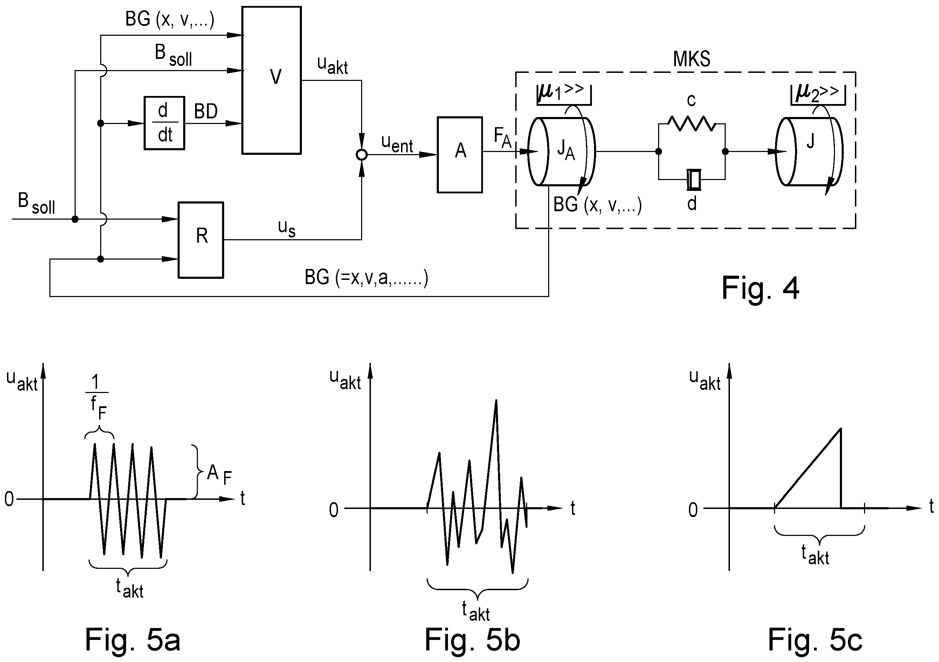

According to the invention, an activation manipulated variable uₐₖₜ is provided for this purpose to change the controller manipulated variable us, which is explained in more detail below with reference to Fig. 4. The statements made previously with regard to Fig. 1, e.g., with regard to the multi-body system MKS or controller R or control unit for implementing the controller R, remain unchanged for the block diagram shown in Fig. 4. With regard to the block diagram shown in Fig. 4, it also applies that, in addition to a position x, a speed v or an acceleration a can be captured as the movement variable BG to be controlled.

In order to realize a tension-free standstill control, the control circuit shown in Fig. 4 is initially provided for determining a setting manipulated variable us from a deviation e between at least one movement variable BG of the drive body Ja, and a standstill set point Bₛₒₗₗ specified for the at least one movement variable BG, wherein the determined setting manipulated variable us is converted by means of an actuator A into a drive force F_{A}, acting on the drive body J_{A}, in order to set the at least one movement variable BG to the standstill set point Bₛₒₗₗ, so that the drive body Ja, is brought to a standstill and/or held at a standstill if the drive body Ja, was already at a standstill. During standstill control, constant target positions, i.e., those that remain constant over time, are preferably specified as standstill set points Bₛₒₗₗ, which, in the case of position control, can, however, have values other than zero. In the case of speed control, standstill set points Bₛₒₗₗ are typically provided, which correspond to a vanishing target speed, i.e., a target speed with the value zero.

Since the drive body Ja, is brought to a standstill and/or held at a standstill, it usually follows that a setting manipulated variable us determined from the specified standstill set point Bₛₒₗₗ by the controller R alone only leads to a drive force F_{A} which no longer overcomes the friction force Fᵣ₁ acting on the drive body J_{A}, i.e., in a known manner no longer overcomes the friction forces resulting from the friction µ₁ in terms of magnitude. Based on this, in the context of the invention, the already mentioned activation manipulated variable uₐₖₜ is now specified, and the determined setting manipulated variable us is changed by the activation manipulated variable uₐₖₜ to a relaxation manipulated variable uₑₙₜ. The relaxation manipulated variable uₑₙₜ is subsequently converted by the actuator A into a relaxation drive force Fₑₙₜ, acting on the drive body J_{A}, to move the stationary drive body J_{A}, wherein the activation manipulated variable uₐₖₜ is specified in such a way that the relaxation drive force F_{A} at least temporarily overcomes the friction force Fᵣ, acting on the drive body J_{A}, during the standstill control.

In the context of this invention, "changing" the setting manipulated variable us by the activation manipulated variable uₐₖₜ means generating a new manipulated variable, specifically the relaxation manipulated variable uₑₙₜ, from the setting manipulated variable us and the activation manipulated variable uₐₖₜ. For this purpose, the activation manipulated variable uₐₖₜ can be added to the setting manipulated variable us, as shown in Fig. 4, or the activation manipulated variable uₐₖₜ can be multiplied by the setting manipulated variable us, or the activation manipulated variable uₐₖₜ and the setting manipulated variable us can be linked to one another by means of a specified mathematical relationship, e.g., by both manipulated variables acting as inputs into a dynamic, multi-variable system and being mapped to a common output, which then corresponds to the relaxation manipulated variable uₑₙₜ. In this context, a suitably trained specialist can make a suitable selection to determine the relaxation manipulated variable uₑₙₜ. Changing the setting manipulated variable us by the activation manipulated variable uₐₖₜ naturally also includes the case that the setting manipulated variable us disappears, i.e., assumes the value zero, and the relaxation manipulated variable uₑₙₜ is then formed entirely by the activation manipulated variable uₐₖₜ (the relaxation manipulated variable uₑₙₜ then usually corresponds to the activation manipulated variable uₐₖₜ). Such scenarios usually occur in the case of a summation of activation manipulated variable uₐₖₜ and setting manipulated variable us

The afore-mentioned steps according to the invention take place in the embodiment shown in Fig. 4 in the block V representing a pilot control unit, whereby the determination of the activation manipulated variable uₐₖₜ can also take place in the controller R. Like the controller R, the block V can of course also be implemented on a suitable control unit. In the case shown in Fig. 4, three further signals are made available to block V, a movement variable BG of the drive body J_{A}, a standstill set point Bₛₒₗₗ specified for this movement variable BG of the drive body J_{A}, and the derivative BD of the movement variable BG determined by differentiation, which can correspond, for example, to a speed. Depending on the application, it may be advantageous to also form further derivatives of the movement variable BG, such as a second derivative, if, for example, an acceleration is to be taken into account, or a third derivative, if, for example, a jerk is to be taken into account.

It should be noted that it is by no means mandatory to supply all of these quantities to block V. What is crucial is that, in block V, it can be detected whether the drive body Ja, is at a standstill or not, or at least is close to reaching a standstill. This can be done, for example, by monitoring whether a speed vₓ corresponds to the value zero for a specified duration or is already very low, or by monitoring whether a position corresponds to a target value xₛₒₗₗ, for a specified duration, depending on which variables are selected as movement variables.

By including an activation manipulated variable uₐₖₜ, which in conjunction with the setting manipulated variable Fs results in a relaxation drive force Fₑₙₜ being generated that overcomes the sum of all acting friction forces, it is ensured that there is at least a brief, repeated movement of the bodies J_{A}, J_{K} of the multi-body system. This relieves any tension that may exist in the mechanical coupling between the bodies J_{A}, J_{K}.

Preferably, suitable control measures are taken to ensure that a movement of the drive body Ja, resulting from the relaxation drive force Fₑₙₜ leads only to a repeated deviation e between the controlled movement variable BG and the standstill set point Bₛₒₗₗ specified for it, which, during the standstill control, does not exceed a specified maximum deviation eₘₐₓ of 10% of a value of the standstill set point Bₛₒₗₗ, specified during the standstill control, or 5% of a value of the standstill set point Bₛₒₗₗ, specified during the standstill control, or 1% of a value of the standstill set point Bₛₒₗₗ, specified during the standstill control, or 0.5% of a value of the standstill set point Bₛₒₗₗ, specified during the standstill control. A person with average training in control engineering knows which steps can be taken for this purpose, such as a manipulated variable limitation that means that the relaxation manipulated variable Fₑₙₜ can only slightly overcome the acting friction forces, e.g., that the relaxation manipulated variable Fₑₙₜ is only 1% or 5% or 10% greater than the acting friction forces.

In order to avoid having to switch on an activation manipulated variable uₐₖₜ every time the drive body Ja, is at a standstill, the change of the setting manipulated variable us by an activation manipulated variable uₐₖₜ can be linked to further conditions. Specifically, in the context of the invention and of course in the context of the block diagram shown in Fig. 4, it can be provided that the activation manipulated variable uₐₖₜ only be determined and used to change the setting manipulated variable us if the drive body Ja, has remained at a standstill for a specified minimum standstill period t_{0,min}. The minimum downtime t_{0,min} can be adapted to specific application cases and can, for example, be 0.01 seconds or 0.1 seconds or 1 second or 10 seconds, or it can also correspond to a longer or shorter period of time.

Possibilities for the concrete design of the activation manipulated variable uₐₖₜ according to the invention are shown in Figures 5a-5c. What the curves shown have in common is that the activation manipulated variable uₐₖₜ is other than zero only for a given activation time period tₐₖₜ. The activation time duration tₐₖₜ can also be selected differently, depending on the application, in order to ensure that the activation manipulated variable uₐₖₜ is not applied for an unnecessarily long time, but also not too short, in order to achieve the desired goal of reducing potential energy. A person skilled in the art is aware of the time limitations required for this, which vary from application to application.

In the curve shown in Fig. 5a, the activation manipulated variable uₐₖₜ is selected in the form of a periodic signal with a specified activation amplitude A_{F} and a specified activation frequency f_{F}, whereby in particular the time average value during the activation period tₐₖₜ corresponds to the value zero, which is often of great advantage in practice, since such curves alone do not usually result in permanent deflections of the moving bodies. In Fig. 5b, the activation manipulated variable uₐₖₜ is realized as a random signal and, in Fig. 5c, as a signal with increasing amplitude A_{F}, which increases until the bodies of the multi-body system MKS execute a movement, and the stored potential energy Eₚₒₜ is reduced.

In a particularly advantageous embodiment, an activation amplitude A_{F} and/or an activation frequency f_{F} and/or an activation time duration t_{add} of the activation manipulated variable uₐₖₜ, but also other characterizing parameters of an activation manipulated variable uₐₖₜ, such as, for example, a ramp gradient in the time course of the activation manipulated variable uₐₖₜ, can be changed by means of an adaptation method during the movement of the drive body J_{A}, wherein different algorithms from the field of adaptive systems can be used, such as least squares methods or maximum likelihood methods or other suitable algorithms. In the same way, a course of an activation manipulated variable uₐₖₜ can also be fixed a priori, e.g., by using prior knowledge about occurring friction forces µ, etc., and the same time course of an activation manipulated variable uₐₖₜ can always be used. It is also conceivable to make a selection from a finite number of predefined time courses of an activation manipulated variable uₐₖₜ during the standstill control, which can be randomly based or can also depend on the state of the actuator A and/or the drive body J_{A}. There are various options for specifying or determining the activation manipulated variable uₐₖₜ, which a specialist knows how to use appropriately.

With regard to the choice of the activation frequency f_{F}, it should be noted that, in the present embodiment, the drive body Ja, and the coupling body J_{K} coupled to the drive body Ja, form an oscillating system, which in any case has at least one resonance frequency. In a particularly advantageous manner, care can be taken here to ensure that no resonance frequencies of a given multi-body system MKS are excited, which can be ensured, for example, by choosing the activation frequency f_{F} to be larger, preferably significantly larger, e.g., twice or five times or ten times larger, than the resonance frequency of the oscillating multi-body system MKS. As mentioned earlier, in certain applications, it can also be useful and advantageous to tune the activation frequency f_{F} exactly to a resonance frequency of the multi-body system MKS and thus to activate it at a resonance point, whereby a given activation amplitude A_{F} of the activation manipulated variable uₐₖₜ achieves the greatest possible effect. A conscious choice between resonance frequencies can also be advantageous, especially in so-called stiff systems whose resonance frequencies are far apart, and where, in this way, the most uniform possible excitation of all bodies of the multi-body system MKS is possible.

In an advantageous manner, the activation frequency f_{F} and the activation amplitude A_{F} of the activation manipulated variable uₐₖₜ are chosen such that the multi-body system MKS is not able to completely follow the dynamics of the activation manipulated variable uₐₖₜ. The movements generated by the activation manipulated variable uₐₖₜ serve exclusively to compensate for tensions in the drive train which are caused by the described frictions µ₁, µ₂, such as in particular static friction, usually at the end of a positioning process when stopping. After a short relaxation phase, the additional activation manipulated variable uₐₖₜ can be removed again when the system then comes to a standstill.

In a further advantageous aspect, further quantities shown in Fig. 1 and Fig. 4 can be incorporated to implement the invention, as explained below. Specifically, it can be provided that the activation manipulated variable uₐₖₜ is only determined and used to change the setting manipulated variable us if a magnitude of the deviation e between the movement variable BG and the standstill set point Bₛₒₗₗ is above a specified deviation threshold value eₘᵢₙ, or it can be provided that the sign of the activation manipulated variable uₐₖₜ be selected as a sign opposite to the sign of the deviation e between the movement variable BG and the standstill set point Bₛₒₗₗ or as a sign corresponding to the sign of the deviation e.

In a particularly advantageous manner, the change of the setting manipulated variable us by the activation manipulated variable uₐₖₜ can be terminated as soon as the magnitude of deviation e between the movement variable BG and the standstill set point Bₛₒₗₗ falls below the specified deviation threshold value eₘᵢₙ again. Since the invention reduces any existing tension and thus allows unnecessary restoring forces to be compensated for, energy can be saved in this way, especially in applications with long downtime phases.

An important practical application of the present invention, which is in particular an application of the invention with only a single drive body Ja, alone, which is not coupled to any other bodies, is shown below with reference to Fig. 6 and Fig. 7. Here, Fig. 6 shows an example of a transport device 1 in the form of a long stator linear motor (LLM) 10 for moving transport units T₁, ..., Tₖ. The LLM 10 consists of a plurality of separate stator segments S₁, ..., Sₚ, of which only the segment S₁ with the transport unit T₁ is shown in Fig. 6. Following on from the above statements, the mechanical body of a transport unit T₁ corresponds to a drive body Ja, according to the invention. In an LLM 10, several stator segments S₁, ..., Sₚ are usually assembled to form a stationary long stator 2. The stator segments S₁, ..., Sₚ can for this purpose be arranged on a stationary support structure SK. Furthermore, the stator segments S₁, ..., Sₚ can be designed in different geometric shapes, e.g., as straight segments or curved segments, in order to realize different transport paths.

Electrical drive coils Lₘ₁, ..., Lₘₙ are arranged along the long stator 2 in a known manner for each stator segment Sm in the longitudinal direction (shown in Fig. 6 only for the stator segment S₁, n is an integer greater than one), which interact with drive magnets Y₁, ..., Y_{L} of the transport units T₁, ..., Tₖ. In an equally well-known manner, based on coil control units 101, 102, a drive force F_{A} for each of the transport units T₁, ..., Tₖ is generated by controlling/setting coil voltages U_{L1}, ..., U_{Ln} dropping across the drive coils Lₘ₁, ..., Lₘₙ, in order to move the transport units T₁, ..., Tₖ and the drive bodies J_{A1}, ..., J_{Ak} linked to them along the long stator 2. As a rule, a plurality of drive coils Lₘ₁, ..., Lₘₙ act simultaneously on a transport unit T₁, ..., Tₖ, which together generate the drive force FA. For reasons of clarity, only two coil control units 101, 102 are shown in Fig. 1. Of course, each coil voltage U_{L1}, ..., U_{Ln} of each drive coil Lₘ₁, ..., Lₘₙ in each stator segment Sₘ is controlled by a coil control unit 101, 102, wherein a plurality of coil control units 101, 102 can also be combined into one control unit. Possible implementations of a coil control unit 101, 102 include microprocessor-based hardware, such as microcontrollers and integrated circuits (ASIC, FPGA). Following on from the above statements, the system of drive magnets Y₁, ..., Y_{L} and drive coils Lₘ₁, ..., Lₘₙ arranged on the long stator 2 forms an actuator A which converts a manipulated variable Fs required by a controller R, preferably by a position controller R, for the controlled movement of a transport unit T₁ into a drive force F_{A} moving the transport unit T₁.

In the embodiment of an LLM 1 shown in Fig. 6, each of the transport units T₁, ... , Tₖ can be moved individually (speed, acceleration, path, direction) and independently (except for the avoidance of possible collisions) of the other transport units T₁, ..., Tₖ by means of a transport controller 100 that is superordinate to the coil control units 101, 102. For this purpose, the transport controller 100 can continuously predefine a position specification (equivalently also a speed specification) for each transport unit T₁, ..., Tₖ to be moved, which is converted by the coil control units 101, 102 into coil voltages U_{L11}, ..., U_{Lpn} required for the movement of the transport unit T₁, ..., Tₖ. The coil control units 101, 102 receive set points SG₁, ..., SGₙ for the control from the transport control 100, which can in particular be corresponding target positions xₛₒₗₗ, or corresponding target speeds vₛₒₗₗ. Since this basic principle of an LLM is sufficiently well known, it will not be discussed in detail here. In the transport control 100, in particular the blocks position controller Rₓ and pilot control unit V discussed with reference to Fig. 1 and Fig. 4 can be implemented.

How the present invention can be advantageously used in an LLM 10 as shown in Fig. 6 is described below with reference to Fig. 7. Specifically, Fig. 7 shows four sequential scenarios a), b), c), and d). In the case of scenario a), the transport unit T₁ and thus the drive body Ja, moves in the coordinate direction xR with a decreasing speed v towards a specified target position xₛₒₗₗ (to the left). As can be seen from scenarios a) and b), the upper side OS of the long stator 2 is subject to a large friction µ₁, which holds back the drive body J_{A}. In the case of LLM 10, so-called V-rollers or V-groove guide rollers are often attached to the upper sides, which often lead to increased friction. Typically, in transport units T₁ of LLM's, a position sensor is attached at a selected and arbitrary point, e.g., in the geometric center of the transport unit T₁ - for example, a magnetoresistive AMR sensor well known from the prior art. If a position x given in the middle of the transport unit T₁ is now recorded as a movement variable BG and converted into a standstill set point Bₛₒₗₗ specified as a target position xₛₒₗₗ, but a part, facing the upper side OS, of the transport unit T₁ is held back due to friction forces, the transport unit T₁ tilts, as shown in scenario b). Although the position x in the coordinate direction xR corresponds to the desired target position xₛₒₗₗ, due to the aforementioned tilting, the transport unit T₁ or the mechanical part of the transport unit T₁, i.e., the drive body J_{A}, is twisted, which leads to undesired stored potential energy and the associated disadvantages.

According to the invention, however, in scenario c), after the transport unit T₁ has come to a standstill, an activation manipulated variable uₐₖₜ is switched on, whereby the transport unit T₁ is set into vibration, the said potential energy is removed from the system by averaging effects, and the tilting in question is resolved. The result of this procedure is scenario d), in which the transport unit T₁ is in the specified target position xₛₒₗₗ, in the x-direction xR, but the tilting described is eliminated.

Since a tilting as described in scenarios a), b), c), and d) of Fig. 7 does not manifest itself in the direction of movement xR, but, rather, in a direction of movement yR that differs from the direction of movement xR, e.g., when a point on the upper side OS on the transport unit T₁ lies above or below a target value yₛₒₗₗ specified for this point in the coordinate direction yR, the following procedure can be used to handle such cases in the context of this invention.

Specifically, it may initially be intended to determine a second position y of the drive body Ja, in a second coordinate direction yR, which is different from the first coordinate direction, and a second speed v_{y} of the drive body J_{A} along the second coordinate direction yR. Based on this, it can be provided that the activation manipulated variable uₐₖₜ only be determined and used to change the setting manipulated variable us if a magnitude of a second position deviation e_{y} between the determined second position y and a second target position yₛₒₗₗ specified for the second position y is above a specified second position threshold value yₘᵢₙ, so that, in the present case of the LLM 10 shown in Fig. 6 and Fig. 7, intervention is only carried out if a tilting as discussed above is present.

## Claims

1. Method for the standstill control of a drive body (J_{A}) on which a friction force (Fᵣ) acts, a setting manipulated variable (us) being determined and converted, by means of an actuator (A), into a drive force (F_{A}) acting on the drive body (J_{A}) in order to bring the drive body (J_{A}) to a standstill and/or to keep it at a standstill, **characterized in that** a setting manipulated variable (us) is determined for the drive body (J_{A}) to be brought to a standstill or for the drive body (J_{A}) that has been brought to a standstill or for the drive body that is held at a standstill, which setting manipulated variable (us) alone results in a drive force (F_{A}) that does not overcome said friction force (Fᵣ), **in that** an activation manipulated variable (uₐₖₜ) is specified and the determined setting manipulated variable (us) is changed by the activation manipulated variable (uₐₖₜ) to a relaxation manipulated variable (uₑₙₜ), **and in that** the relaxation manipulated variable (uₑₙₜ) is converted, by means of the actuator (A), into a relaxation drive force (Fₑₙₜ) acting on the drive body (J_{A}) for moving the drive body (J_{A}), the activation manipulated variable (uₐₖₜ) being specified such that the relaxation drive force (Fₑₙₜ) at least temporarily overcomes the friction force (Fᵣ) acting on the drive body (J_{A}) during the standstill control.

2. Method according to claim 1, **characterized in that** the setting manipulated variable (us) is determined by means of a controller (R) from a deviation (e) between at least one movement variable (BG) of the drive body (J_{A}) and a standstill set point (Bₛₒₗₗ) specified for the at least one movement variable (BG), in order to set the at least one movement variable (BG) of the drive body (J_{A}) to the specified standstill set point (Bₛₒₗₗ), **or in that** the setting manipulated variable (us) is determined by means of a control system from a standstill set point (Bₛₒₗₗ) specified for the at least one movement variable (BG), without taking the at least one movement variable (BG) into account when determining the setting manipulated variable (us).

3. Method according to claim 2, **characterized in that** a movement of the drive body (J_{A}) resulting from the relaxation drive force (Fₑₙₜ) leads to a deviation (e) of the at least one movement variable (BG) from the standstill set point (Bₛₒₗₗ) specified for it, which, during the standstill control, does not exceed a specified maximum deviation of 10% of a value of the specified standstill set point (Bₛₒₗₗ) or 5% of a value of the specified standstill set point (Bₛₒₗₗ) or 1% of a value of the specified standstill set point (Bₛₒₗₗ) or 0.5% of a value of the specified standstill set point (Bₛₒₗₗ).

4. Method according to any one of the preceding claims, **characterized in that** the friction force (Fᵣ) acting on the drive body (J_{A}) is caused by a static friction or a sliding friction or a rolling friction or a rolling friction or a combination of these frictions.

5. Method according to any one of the preceding claims, **characterized in that** the activation manipulated variable (uₐₖₜ) is only determined and used to change the setting manipulated variable (us) when the drive body (J_{A}) has been held at a standstill for a specified minimum standstill period (t_{0,min}).

6. Method according to any one of the preceding claims, **characterized in that** the activation manipulated variable (uₐₖₜ) is determined in the form of a periodic signal with a specified activation amplitude (A_{F}) and/or a specified activation frequency (f_{F}).

7. Method according to any one of the preceding claims, **characterized in that** the activation manipulated variable (uₐₖₜ) is used for a specified activation time period (t_{add}) to change the setting manipulated variable (us).

8. Method according to any one of the preceding claims, **characterized in that** a time average value of the activation manipulated variable (uₐₖₜ) corresponds to the value zero.

9. Method according to any one of claims 2 to 8, **characterized in that** a position (x) of the drive body (J_{A}) is determined as a movement variable (BG) of the drive body (J_{A}), and a target position (xₛₒₗₗ) for the determined position (x) is specified as a standstill set point (Bₛₒₗₗ), **or in that** a speed (vₓ) of the drive body (J_{A}) is determined as a movement variable (BG) of the drive body (J_{A}), and a vanishing target speed (vₛₒₗₗ) for the determined speed (vₓ) is specified as a standstill set point (Bₛₒₗₗ).

10. Method according to any one of claims 2 to 9, **characterized in that** a position (x) of the drive body (J_{A}) is determined as a movement variable (BG) of the drive body (J_{A}), and a target position (xₛₒₗₗ) for the determined position (x) is specified as a standstill set point (Bₛₒₗₗ), wherein the activation manipulated variable (uₐₖₜ) is only determined and used to change the setting manipulated variable (us) if a magnitude of a position deviation (eₓ) between the position (x) of the drive body (J_{A}) and the specified target position (xₛₒₗₗ) when the drive body (J_{A}) is at a standstill is above a specified deviation threshold value (e_{x,min}).

11. Method according to claim 9, **characterized in that** the sign of the activation manipulated variable (uₐₖₜ) is selected as a sign opposite to the sign of the position deviation (eₓ) or as a sign corresponding to the sign of the position deviation (eₓ).

12. Method according to claim 9, 10, or 11, **characterized in that** the change in the setting manipulated variable (us) by the activation manipulated variable (uₐₖₜ) is terminated as soon as the magnitude of the position deviation (eₓ) falls below the specified deviation threshold value (e_{x,min}).

13. Method according to any one of the preceding claims, **characterized in that** the drive body (J_{A}) is mechanically coupled to a number n of further bodies on each of which a friction acts, in particular to a coupling body (J_{K}) on which a friction (µ_{R}) acts, and forms an oscillating multi-body system with at least n resonance frequencies with the number n of further bodies.

14. Method according to claim 13, **characterized in that** the activation manipulated variable (uₐₖₜ) is specified in the form of a periodic signal with a specified activation amplitude (A_{F}) and/or a specified activation frequency (f_{F}), wherein the activation frequency (f_{F}) is selected to be greater than the largest of the n resonance frequencies of the resonant multi-body system (MKS), or is selected to be greater than or equal to the smallest of the n resonance frequencies of the resonant multi-body system (MKS), or equal to one of the n resonance frequencies of the resonant multi-body system (MKS), **and/or in that** a magnitude of a drive force (F_{A}) resulting from a conversion of the relaxation manipulated variable (uₑₙₜ) by the actuator (A) overcomes, at least temporarily, a sum of the friction force acting on the drive body (J_{A}) and the friction forces acting on the number n of further bodies, which friction forces result from the respective acting frictions (µ).

15. Method according to any one of the preceding claims, **characterized in that** a position (x) and a speed (vₓ) of the drive body (J_{A}) in a first coordinate direction (xR) are determined as movement variables (BG), and the drive force (F_{A}) generated by the actuator (A) acts on the drive body (J_{A}) along the first coordinate direction (xR), **in that** a second position (y) of the drive body (J_{A}) in a second coordinate direction (yR) different from the first and a second speed (v_{y}) of the drive body (J_{A}) along the second coordinate direction (yR) are determined as further movement variables (BG), **and in that** the activation manipulated variable (uₐₖₜ) is only determined and used to change the setting manipulated variable (us) if a magnitude of a second position deviation (e_{y}) between the determined second position (y) and a second target position (yₛₒₗₗ) specified for the second position (y) is above a specified second position threshold value (yₘᵢₙ).

16. Drive system comprising a movable drive body (J_{A}) on which a friction force (Fᵣ) acts, wherein a control unit, which, in order to control the standstill of the drive body (J_{A}), is designed to determine a setting manipulated variable (us), and an actuator (A) are provided, the actuator (A) being designed to convert the determined setting manipulated variable (us) into a drive force (F_{A}) acting on the drive body (J_{A}) in order to bring the drive body (J_{A}) to a standstill and/or to keep it at a standstill, **characterized in that** the control unit is further designed to determine a setting manipulated variable (us) for the drive body (J_{A}) to be brought to a standstill or for the drive body (J_{A}) that has been brought to a standstill or for the drive body (JA) that is held at a standstill, which setting manipulated variable (us) alone results in a drive force (F_{A}) that does not overcome said friction force (Fᵣ), **in that** the control unit is further designed to specify an activation manipulated variable (uₐₖₜ) and to change the determined setting manipulated variable (us) by means of the activation manipulated variable (uₐₖₜ) to a relaxation manipulated variable (uₑₙₜ), **and in that** the actuator (A) is further designed to convert the relaxation manipulated variable (uₑₙₜ) into a relaxation drive force (Fₑₙₜ), acting on the drive body (J_{A}), for moving the drive body (J_{A}), the activation manipulated variable (uₐₖₜ) being specified such that the relaxation drive force (Fₑₙₜ) at least temporarily overcomes the friction force (Fᵣ) acting on the drive body (J_{A}) during the standstill control.
